# NEUE EUROPÄISCHE PATENTSCHRIFT

(11) **EP 1 098 947 B2**
(45) Veröffentlichungstag und Bekanntmachung des Hinweises auf die Entscheidung über den Einspruch: **20.07.2005**
(45) Hinweis auf die Patenterteilung: 03.04.2002
(21) Anmeldenummer: 99929323.6
(22) Anmeldetag: 02.07.1999
(51) Int. Cl.: C09J 193/04, C08L 93/04, C09J 191/06, C08L 91/06, C09J 125/14, C09J 131/04, C09J 133/04

(54) **MISCHUNG AUS KOLOPHONIUM-HARZ UND WACHS**
MIXTURE OF COLOPHONIUM RESING AND WAX
MELANGE DE RESINE DE COLOPHANE ET DE CIRE

(30) Priorität: 10.07.1998 DE 19831000
(43) Veröffentlichungstag der Anmeldung: 16.05.2001
(73) Patentinhaber: Henkel Kommanditgesellschaft auf Aktien, 40589 Düsseldorf (DE)
(72) Erfinder: URBATH, Hartmut, D-42389 Wuppertal (DE); KLEIN, Johann, D-40593 Düsseldorf (DE); WINDHÖVEL, Udo, Frank, D-40789 Monheim (DE)
(74) Vertreter: Strehlke, Ingo Kurt
(86) Internationale Anmeldenummer: PCT/EP1999/004580
(87) Internationale Veröffentlichungsnummer: WO 2000/002972

(56) Entgegenhaltungen:
- EP-A- 0 221 461
- EP-A- 0 620 243
- WO-A-97/40117
- DE-A- 19 531 849
- US-A- 2 381 946
- US-A- 3 554 949
- US-A- 4 654 388

## Beschreibung

Die Erfindung betrifft die Verwendung einer Mischung aus mindestens einem Kolophonium-Harz und/oder seinen Derivaten mit mindestens einem Wachs bei der Herstellung von wäßrigen Klebstoffdispersionen sowie die auf diese Weise erhältlichen wäßrigen Klebstoffdispersionen selbst.

Derartige Mischungen sind bekannt. So wird in der DE 195 31 849 eine Lösung von Kolophonium-Harz in Fettsäureestern beschrieben. Diese Lösungen mit flüssigen Fettsäureestern werden zu Dispersionsklebstoffen auf der Basis von Styrol/Acrylsäureestern-Copolymeren verwendet. Die dabei erhaltenen Klebstoffe eignen sich zum Verkleben von Fußbodenbelägen.

Die WO 97/40117 betrifft harzhaltige Dispersionsklebstoffe auf der Basis von wäßrigen Polymerdispersionen. Sie enthalten eine Harzzubereitung, die aus einer Mischung aus 20 bis 90 Gew.-% an bestimmten Kolophonium-Harzen und ihren Derivaten sowie aus 80 bis 10 Gew.-% an bei Raumtemperatur flüssigen Ölen bestehen. Bei den flüssigen Ölen handelt es sich entweder um bestimmte Glycerinester oder um bestimmte Gemische gesättigter und/oder ungesättigter C₁₄- bis C₂₂-Fettsäuren pflanzlicher Herkunft mit einwertigen C₁- bis C₁₂-Alkoholen.

Obwohl die Emission dieser Dispersionsklebstoffe mit den Kolophonium-Lösungen flüssiger Fettsäureester bereits gering ist, ist eine weitere Verbesserung doch wünschenswert, möglichst mit dem Ziel, die Emission unter die Geruchsschwelle zu drücken. Zumindest sollten die Harzzubereitungen (= Mischungen aus Kolophonium-Harz und/oder seinen Derivaten mit Wachs) sowie die Dispersionsklebstoffe geruchsarm sein. Darüber hinaus sollte natürlich die Herstellung der Dispersionsklebstoffe, ihre Lagerung und ihre Anwendung unverändert gut sein, möglichst sogar ebenfalls verbessert werden. Das gilt insbesondere für eine so wichtige Eigenschaft wie die Anfangsklebrigkeit im noch nassen Zustand.

Daraus ergibt sich die Aufgabe, eine Kolophonium-Mischung bereit zu stellen, die die Herstellung und die Eigenschaften von Dispersionsklebstoffen möglichst unter Vermeidung aller angegebenen Nachteile verbessert, wobei auf die Geruchsarmut und die hohe Anfangsklebrigkeit besonderer Wert gelegt wird.

Die Lösung ist den Patentansprüchen zu entnehmen. Sie beruht im wesentlichen in der Verwendung von bei Raumtemperatur festen Wachsen als Trägermedium zur Einarbeitung der klebrig machenden Harze in die wäßrige Polymerdispersion. Gegenstand der Erfindung ist also die Verwendung einer Mischung aus mindestens einem Kolophonium-Harz und/oder seinen Derivaten mit mindestens einem Wachs, wobei die Wachse einzeln oder im Gemisch miteinander bei 20°C fest sind, bei der Herstellung von wäßrigen Klebstoffdispersionen.

Mit "fest" ist gemeint, daß die Wachse einzeln oder im Gemisch miteinander eine definierte Form haben und deren Änderung großen Widerstand entgegen bringen. Sie müssen nicht hochkristallin sein und sind in der Regel auch weitgehend amorph. Die erfindungsgemäß verwendeten Wachse besitzen einen Erweichungspunkt (bestimmt nach einer modifizierten ring-and-ball-Methode, siehe Beispiele) von mindestens 20°C. Sie gehen in der Regel oberhalb des Erweichungspunkts in einen niedrigviskosen Zustand über. Dadurch unterscheiden sie sich von Harzen und plastischen Massen sowie von Metallseifen usw..

Stoffe, die im oben definierten Sinne "fest" sind und auch die übrigen thermischen und rheologischen Eigenschaften erfüllen, werden als "Wachse" bezeichnet. In der Regel sind sie durch folgende Eigenschaften gekennzeichnet: Sie sind bei 20 °C knetbar, also nicht glasartig. Sie schmelzen ohne Zersetzung oberhalb von 40 °C und werden zwischen 50 und 90 °C niedrigviskos. Ihre Schmelze zieht keine Fäden. Sie sind frei von aschebildenden Verbindungen.

Konkrete Beispiele aus der Klasse der natürlichen Wachse sind: Candelillawachs, Carnaubauwachs, Japanwachs, Espartograswachs, Korkwachs, Guarumawachs, Reiskeimölwachs, Zuckerrohrwachs, Ouricurywachs, Montanwachs, Bienenwachs, Schellackwachs, Walrat, Lanolin (Wollwachs), Bürzelfett, Ceresin, Ozokerit (Erdwachs), Petrolatum, Paraffinwachse, Bienenwachs und Mikrowachse. Konkrete Beispiele aus der Klasse der chemisch modifizierten Wachse sind: Montanesterwachse, Sasolwachse, hydrierte Jojobawachse und anoxydierte Polyethylenwachse. Konkrete Beispiele aus der Klasse der synthetischen Wachse sind: Polyalkylenwachse, Polyethylenglykolwachse, Ethylen-Vinylacetat-Wachse, Acrylat-Wachse, Ethylen-Acrylsäure-Copolymer-Wachse und Polybutylenglykol-Wachse.

Bevorzugt sind wachsartige Fettstoffe. Bei den Fettstoffen handelt es sich um geradkettige unveränderte, modifizierte und/oder derivatisierte Fettsäuren bzw. Fettalkohole mit mehr als 6, insbesondere mit 8 bis 22 C-Atomen.

Von den Fettalkoholen sind auch die höhermolekularen wasserunlöslichen Fettalkohole mit ca. 24 bis 36 Kohlenstoff-Atomen interessant, vor allem in Form von Estern mit höhermolekularen Fettsäuren. Als Wachsalkohole seien genannt: Lignocerylalkohol[1-Tetracosanol, H₃C-(CH₂)₂₂-CH₂OH), Cerylalkohol (H₃C-(CH₂)₂₄-CH₂OH), Myricylalkohol[1-Triacontanol, H₃C-(CH₂)₂₈-CH₂OH] u. Melissylalkohol[1-Hentriaconaol, H₃C-(CH₂)₂₉-CH₂OH]. Unter Wollwachsalkoholen versteht man ferner Triterpenoid- und Steroid-Alkohole.

Auch bei den Fettsäuren kommen höhermolekulare Fettsäuren mit mindestens 22 Kohlenstoff-Atomen in Frage, z.B. Behensäure, Tetracosansäure, Cerotinsäure oder Melissinsäure, die mit Wachsalkohol, Steroid oder Triterpenalkoholen verestert Hauptbestandteil vieler pflanzlicher und tierischer Wachse sind.

Bei der Modifizierung der Fettsäuren handelt es sich um deren partielle oder vollständige Hydrierung. Bei der Derivatisierung handelt es sich um eine Veresterung, Amidierung oder Reduktion der Säure-Gruppe, insbesondere um eine partielle oder vollständige Veresterung mit ein- bis dreiwertigen Alkoholen mit 1 bis 22 C-Atomen, bzw. um eine partielle oder vollständige Amidierung mit Ammoniak, primären oder sekundären Aminen mit 1 bis 22 C-Atomen. Diese Derivate sind gegenüber der Fettsäure oder dem Fettalkohol bzw. Fettalkoholether bevorzugt.

Die modifizierten Fettsäuren können mit Alkoholen vollständig oder partiell verestert vorliegen: Unter "Alkoholen" sind Hydroxyl-Derivate von aliphatischen und alicyclischen gesättigten, ungesättigten und/oder verzweigten Kohlenwasserstoffen zu verstehen. Es kommen sowohl 1- als 2- oder höherwertige Alkohole in Frage. Hierzu gehören neben einwertigen Alkoholen auch die aus der Polyurethan-Chemie an sich bekannten niedermolekularen Kettenverlängerungsmittel bzw. Vemetzer mit Hydroxylgruppen. Konkrete Beispiele aus dem niedermolekularen Bereich sind Methanol, Ethanol, Propanol, Butanol, Pentanol, 2-Ethylhexanol, 2-Octanol, Ethylenglykol, Propylenglykol, Trimethylenglykol, Tetramethylenglykol, Butylenglykol-2,3, Hexamethylendiol, Octamethylendiol, Neopentylglykol, 1,4-Bishydroxymethylcyclohexan, Guerbetalkohol, 2-Methyl-1,3-Propandiol, Hexantriol-(1,2,6), Glycerin, Trimethylolpropan, Trimethylolethan, Pentaerythrit, Sorbit, Formit, Methylglycosikd, Butylenglykol, Stearylalkohol, Behenylalkohol, die reduzierten Dimer- und Trimer-Fettsäuren sowie höheren Polyethylen-, Polypropylen- und Polybutylenglykole. Monophenylglykol oder von Kollophoniumharzen abgeleitete Alkohole wie Abietylalkohol können ebenfalls für die Veresterung verwendet werden. Anstelle der Alkohole können auch OH-haltige tertiäre Amine verwendet werden.
Als "Amine" für die Herstellung von Amiden seien genannte: Monoethanolamin, Diethanolamin, Ethylendiamin, Hexamethyldiamin, Ammoniak etc..
Die Fettalkohole können durch Reduktion der Säuregruppe der modifizierten Fettsäuren oder durch katalytische Hydrierung der Ester der modifizierten Fettsäuren hergestellt werden.

Bei den erfindungsgemäßen Fettstoffen, die der Hydrierung entstammen, handelte es sich um partiell oder vollständig hydrierte Derivate ungesättigter, in der Natur vorkommender Fettsäuren wie Palmitolein-, Öl-, Linolen, Ricinol- und Erucasäure bzw. Gemische dieser Fettsäuren. Fettstoffe dieser Art können nicht nur über chemische Reaktion, sondem auch über physikalische Trennverfahren wie Umnetztrennung oder Ausfrieren aus natürlich vorkommenden Fettsäuregemischen bzw. Fettsäureestergemischen gewonnen werden, die naturgemäß hohe Anteile gesättigter Fettsäuren enthalten wie z.B. tierische Fette oder Palmöl. Als Beispiele seien genannt: Palmitinsäure, Palmitinsäuremethylester, Palmitinsäuretriglycerid, Palmitoylalkohol, Palmitinsäuremonoethanolamid, Elaidinsäure, Elaidinsäuremethylester, Stearinsäure, Stearinsäuremethylester, Stearylalkohol, Stearinsäurestearylester, 12-Hydroxystearinsäuremethylester, 12-Hydroxystearylalkohol, gehärtetes Ricinusöl, Behensäuremethylester.

Die Herstellung der modifizierten Fettstoffe kann entweder aus den modifizierten Fettsäuren erfolgen oder durch Modifizierung entsprechender Fettstoffe.

Üblicherweise werden kommerziell verfügbare, technische Gemische verwendet, die neben den oben beschriebenen modifizierten Fettstoffen noch andere, dem Fachmann bekannten Nebenbestandteile wie kurzkettige, ungeradkettige, verzweigte und funktionelle Gruppen enthaltende Fettsäuren bzw. deren Derivate enthalten. Zum Teil sind die Nebenbestandteile nicht bekannt und können je nach Art der Modifizierung und des Ausgangsmaterials bis zu 50 Gew.-% ausmachen.

Die modifizierten Fettstoffe können sowohl pflanzlichen als auch tierischen Ursprungs sein.

Als Beispiele seien folgende Produkte der Henkel KGaA genannt: Edenor ME ST 1 (Stearinsäure/Palmitinsäuregemisch), Edenor FHTi (Stearinsäure technisch), Edenor C 16 92-94 (Palmintinsäure), Edenor C 18 98-100 (Stearinsäure), Edenor C 22 85 R (Behensäure), Edenor ME AS 16 (Palmitinsäuremethylester), Edenor Me Ti (Stearinsäuremethylester technisch), Lorol C 18 (Stearylalkohol), Stenol 1822 A (Behenylalkohol), Stenol 16-18 (Palmityl-/Stearylalkohol), Edenor NHTi (Stearinsäuretriglycerid).

Als Beispiele seien folgende Produkte der Unichema genannt: Uniwax 1750 (Stearinsäureamid), Uniwax 1760 (Ethylenbisstearamid), Estol 1482 (Methylstearat), Estol CEP (Cetylpalmitat), Estol MEP (Methylpalmitat), Prifac 5902 (partiell hydrierte Talgfettsäure), Prifac 2981 (Stearinsäure), und Pristerene 4913 (Palmitin-/Stearinsäuretriglycerid).

Als Gemische kommerziell verfügbarer Produkte seien genannt: eine Mischung von Pristerene 4913 und Priolube 1451 oder Edenor FHTi und Estol CEP.

Die Fettstoffe sind weitgehend gesättigt oder enthalten trans-Doppelbindungen: Sie enthalten C-C-Doppelbindungen in einer Konzentration, die einer Jodzahl von weniger als 100, insbesondere weniger als 75 und vor allem weniger als 50 entspricht.

Um die Klebeeigenschaften und/oder die Rheologie der Klebstoffe zu verbessern, können bis zu 100% und vorzugsweise bis zu 50% bezogen auf das feste Wachs und abhängig von der Art der verwendeten Polymere auch nicht erfindungsgemäße Weichmacher mitverwendet werden, wie sie z.B. in der WO 96/06897 beschrieben sind. Als Beispiele seien flüssige Fettsäureester wie Methyllaurat, Isopropylmyristat, Octylcaprylat, epoxydierte Fettstoffe wie epoxidiertes Sojaöl, epoxidiertes Leinöl, Epoxystearinsäuremethylester, Diepoxystearinsäuremethylester, Epoxystearinsäure-2-ethylhexylester, Vemoniaöl, epoxidiertes Palmkemöl, Ester des Glycerins wie z.B. Triacetin, Capryl/Caprinsäuretriglycerid, Rapsöl, Sojaöl und Ricinusöl genannt. Aber auch gängige, dem Fachmann bekannte petrochemisch basierte Weichmacher wie Phthalsäureester, Monophenylglykol, Adipinsäureester, Chlorparaffine, polymere Weichmacher, Benzoesäureester, Trimellithsäureester und Zitronensäureester können zusätzlich eingesetzt werden.

Die zusätzlich verwendeten flüssigen Weichmacher können sowohl der Harzschmelze als auch vorzugsweise der fertigen Klebstoffformulierung zugegeben werden.

Wichtig ist jedoch, daß die Mischung aus Wachs und zusätzlichem Weichmacher ebenfalls einen Erweichungspunkt von mindestens 20°C besitzt.
Mit Kolophonium-Harz werden zusammenfassend Balsam-, Wurzel- und Tall- Harze bezeichnet. Es handelt sich dabei um Harze pflanzlicher Herkunft, die als komplexe Gemische von sogenannten Harzsäuren vorliegen. Solche natürlichen Harzsäuregemische bestehen im wesentlichen aus speziellen ungesättigten Carbonsäuren mit der Bruttoformel C₂₀H₃₀O₂, z.B. Abietinsäure, Neoabietinsäure, Lävopimarsäure, Pimarsäure, Isopimarsäure, Palustrinsäure u.a. gegebenenfalls mit geringen Anteilen an hydrierten, dehydrierten oder oxidierten Harzsäuren sowie sogenannten Neutralstoffen, wie Fettsäureestern, Terpenen, Terpenalalkoholen und Kohlenwasserstoffen.

Neben dem Kolophonium-Harz selbst sind auch chemisch veränderte oder modifizierte Kolophoniumharze mit einem Erweichungsbereich bzw. Schmelzpunkt zwischen 15 und 130 °C als klebrigmachende Harze geeignet. Hierbei handelt es sich insbesondere um Derivate von Kolophonium, die erhalten werden durch Isomerisierung, Dimerisierung, Polymerisierung, Disproportionierung oder Hydrierung und/oder durch homogene oder gemischte Veresterung mit ein-, zwei- oder mehrwertigen Alkoholen, wie z.B. mit Methanol, Ethylenglykol, Diethylenglykol, Triethylenglykol, Glycerin, Pentaerythrit u.a. sowie durch Veresterung von Harzsäurederivaten, wie z.B. Ester des Hydroabietylalkohols mit ein- oder mehrwertigen Alkoholen. Auch mit Paraformaldehyd modifizierte Kolophoniumharze sind brauchbar.

Vorzugsweise hat das Kolophonium-Harz bzw. seine Derivate einen Erweichungsbereich von 15 bis 130 °C, insbesondere von 15 bis 95 °C (ring and ball). Bevorzugte Harze sind bei Raumtemperatur mittel- bis hochviskose Flüssigkeiten oder bis zu 120 °C schmelzende Festkörper.

Hohe Anfangsklebrigkeit und Kohäsion der erfindungsgemäß hergestellten Dispersionsktebstoffe läßt sich vor allem erreichen mit Harzzubereitungen aus Harzen, die selbst fest sind und einen Schmelzpunkt bzw. Erweichungsbereich zwischen 50 bis 130 °C aufweisen. Harzzubereitungen aus Harzen, die bei Raumtemperatur selbst flüssig sind oder einen Schmelzpunkt bzw. Erweichungspunkt zwischen 25 bis 50 °C aufweisen, ergeben weichere Dispersionsklebstoffe mit zwar guter Anfangsklebrigkeit, aber geringerer Kohäsion. Erfindungsgemäß können durch entsprechende Auswahl der Harze oder durch Abmischung von Harzen mit unterschiedlichem Schmelzpunkt bzw. Erweichungsbereich Harzzubereitungen hergestellt werden, mit denen sich die Klebrigkeits- und Festigkeitseigenschaften der daraus hergestellten Dispersionsklebtoffe gezielt einstellen lassen.

Zusätzlich zu den Kolophonium-Harzen können auch noch andere Tackifier verwendet werden, vor allem Kohlenwasserstoff- oder - Phenolharze bzw. Terpenphenolharze. Diese Harze können allein oder in beliebigen Mischungen eingesetzt werden, bevorzugt werden sie mit einem Gewichtsanteil von 0 bis 80, insbesondere von 5 bis 40 Gew.-% neben den Kolophoniumharzen eingesetzt.
Wenn im folgenden Text von "Harzen" die Rede ist, so ist zumindest eines der oben beschriebenen Harze gemeint.

Nach der Lehre dieser Erfindung ergeben Harzzubereitungen, bei denen das Harz : Wachs-Verhältnis so hoch wie möglich liegt und sich innerhalb eines Temperaturbereiches von 20 bis 100 °C gerade noch eine verfahrenstechnisch handhabbare, pump- und mischbare Viskosität ergibt, bei gleichem Mengenanteil in den daraus hergestellten Dispersionsklebstoffen eine höhere Anfangsklebrigkeit und Kohäsion im Vergleich zu Harzzubereitungen mit niedrigerem Harz: Wachs-Verhältnis. Niedrigere Harz : Wachs-Verhältnisse liefern Harzzubereitungen mit niedrigerer Viskosität und ergeben weichere Dispersionsklebstofe mit geringerer Anfangsklebrigkeit und Kohäsion, aber mit längerer, offener Zeit. Grundsätzlich geeignet sind Zusammensetzungen aus 5 bis 50, insbesondere 10 bis 20 Gew.-% an mindestens einem Wachs und 95 bis 50, insbesondere 80 bis 90 Gew.-% an mindestens einem Harz, bezogen auf die Mischung aus Wachsen und Harzen. Die jeweils am besten geeigneten Harz : Wachs-Verhältnisse hängen von der Art der Harze und Wachse, von der gewünschten Viskosität der Harzzubereitung und von den gewünschten Eigenschaften des Dispersionsklebstoffs ab. Sie lassen sich auf einfache Weise durch Versuche bestimmen.

Die erfindungsgemäß verwendete Mischung kann auch Hilfsstoffe enthalten, z.B. um die Viskosität der Harzlösung zu senken oder um die Verträglichkeit mit der Polymerdispersion zu verbessern.

Nach der Lehre dieser Erfindung nimmt die in einem Dispersionsklebstoff erreichbare Anfangsklebrigkeit und Kohäsion bei gleichem Harz: Wachs-Verhältnis mit der Menge der eingearbeiteten Harzzubereitung zu, sofern es sich um Harzzubereitungen handelt, deren Eigenklebrigkeit und Eigenkohäsion über der der nicht mit der Harzzubereitung versetzten Klebstoffzubereitung liegt. Geeignet im Sinne der Erfindung sind Mengenanteile der Harzzubereitung im Dispersionsklebtoff von 5 bis 60 %, wobei Mengenanteile von 10 bis 25 % bevorzugt werden.

Die Herstellung der erfindungsgemäß verwendeten Harzzubereitungen (= Mischung aus Harz und Wachs) erfolgt in der Weise, daß das Wachs in einem beheizbaren Mischbehälter vorgelegt und auf eine Temperatur von mindestens 40 °C, bevorzugt 60 bis 120 °C, erwärmt wird. Unter Rühren werden die Harze portionsweise zugegeben und eingemischt, bis eine transparente Mischung entsteht. Die resultierende Zubereitung kann anschließend noch ca. 30 Minuten bis zu mehreren Stunden unter Rühren auf ca. 100 °C erwärmt werden, um gegebenenfalls über einen Kühler flüchtige Inhaltsstoffe, z.B. Terpene, aus den Kolophoniumharzen, abzutrennen. Zweckmäßigerweise wird das feste Wachs gemeinsam mit dem Harz in einem heizbaren Mischbehälter vorgelegt, auf 60 bis 90 °C erwärmt und so lange gerührt, bis eine transparente Mischung entstanden ist.

Vorzugsweise wird die fertig gemischte, homogene Harzzubereitung unter Rühren auf 20 bis 95 °C, bevorzugt auf 75 bis 85 °C, erwärmt bzw. abgekühlt, dann in diesem Temperaturbereich sofort weiterverarbeitet oder zwischengelagert. Die fertige, flüssige Harzzubereitung kann also direkt in die in einem anderen Mischer vorgelegte Polymerdispersion bzw. Mischung der übrigen Klebstoffbestandteile eingemischt werden. Sie kann jedoch auch abgekühlt und vor der Eindispergierung wiedererwärmt werden oder bei einer Temperatur zwischengelagert werden, bei der sie in flüssigem, förderfähigem Zustand verbleibt.

Vorzugsweise ist die erfindungsgemäß verwendete Harzzubereitung eine homogene Mischung, was an ihrer Transparenz zu erkennen ist.

Erfindungsgemäß wurden Harzzubereitungen gefunden, die innerhalb erfindungsgemäßer Mengenbereiche den gestellten Anforderungen in hohem Maße gerecht werden. Sie sind homogen flüssig und können innerhalb eines Temperaturbereiches von 20 bis 95 °C in eine für die Handhabung erforderliche Viskosität gebracht werden. Die erfindungsgemäßen Harzzubereitungen lassen sich sehr gut in Dispersionszubereitungen einarbeiten und führen überraschend zu sehr variabel einstellbaren Anfangsklebrigkeiten der damit hergestellten Dispersionsklebstoffe. Eine negative Wirkung auf die damit verklebten Beläge ist nicht erkennbar.

Die erfindungsgemäß verwendeten, flüssigen Trägermedien weisen keinen meßbaren Dampfdruck auf, so daß sich die VOC-Emissionen der Harzzubereitung im wesentlichen auf die Eigenemissionen der verwendeten Harze beschränken. Die damit hergestellten Dispersionsklebstoffe zeigen im Vergleich zu nach bekannten Verfahren hergestellten Klebstoffen einen deutlich geringeren Geruch sowohl in der Anfangsphase als auch in der Langzeitphase. Sie entsprechen damit in hohem Maße den Anforderungen eines integrierten Arbeits-, Umwelt- und Verbraucherschutzes. Aufgrund ihres gesteigerten Anteils an nachwachsenden, biologisch abbaubaren Bestandteilen sind sie auch in erhöhtem Maß umweltverträglich.

Die erfindungsgemäß verwendete Harzzubereitung zeichnet sich durch eine geringe Viskosität bei 70 °C aus. Sie liegt unter 3, vorzugsweise unter 2,5 Pas für eine Mischung aus 80 Gew.-% Kolophonium-Harz und 20 Gew.-% Wachs (gemessen nach Brookfield (BT Spindel 4, 20 Upm). Dieser überraschende Effekt kann unterschiedlich genutzt werden, z.B. um die Harz-Konzentration zu erhöhen oder um die Verarbeitungs-Temperatur zu senken. Auch auf die Rheologie des Klebstoffes gibt es Auswirkungen: Die Dispersion läßt sich leichter verstreichen.

Die erfindungsgemäß verwendeten Harzzubereitungen können zur Herstellung harzhaltiger Polymerdispersionen bzw. harzhaltiger wäßriger Dispersions-Klebstoffeverwendet werden. Als dafür geeignet haben sich Polymerdispersionen an sich bekannter Art erwiesen, die bei Temperaturen von 20 bis 70°C eine ausreichende Scherstabilität aufweisen, z.B. wäßrige Dispersionen von Homo-, Co- und insbesondere Blockcopolymeren auf Basis von Acrylsäureestern, Methacrylsäureestem, Acrylsäure, Methacrylsäure, Acrylnitril, Vinylacetat, Vinylchlorid, Ethylen, Styrol, Butadien u.ä. sowie Gemische solcher Polymerdispersionen. Diese Aufzählung dient nur als Beispiel; die grundsätzliche Eignung anderer Polymerdispersionen läßt sich durch einfache Laborversuche ermitteln. Bevorzugt sind Homo- und Copolymere des Vinylacetats, insbesondere mit Ethylen oder Homo- und Copolymere von Acrylaten mit 1 bis 22 C-Atomen in der Alkohol-Komponente, insbesondere mit Styrol oder Acrylnitril.

Die Einarbeitung der erfindungsgemäß verwendeten Harzzubereitungen in Dispersionsklebstoffe kann auf unterschiedliche, dem Fachmann geläufige Weisen erfolgen, so wie das schon bisher mit bekannten Harzzubereitungen praktiziert wird. Im einfachsten Fall wird dazu die Polymerdispersion, gegebenenfalls versehen mit Dispergier- und Entschäumungsmitteln sowie anderen Zusatzmitteln und Füllstoffen, vorgelegt und die flüssige Harzzubereitung portionsweise eindispergiert. Sowohl die vorgelegte Dispersionszubereitung als auch die Harzzubereitung kann bei der Eindispergierung in einem Temperaturbereich zwischen 20 und 95, bevorzugt 50 bis 85 °C vorliegen. Die jeweils optimalen Einarbeitungstemperaturen sind abhängig von der Temperaturstabilität der Dispersionszubereitung und der Viskosität der Harzzubereitung. Die Dispergierung wird solange durchgeführt, bis eine homogene Klebstoffzubereitung vorliegt. Der Fachmann für Dispersionsklebstoffe ist mit dieser Arbeitsweise vertraut.

Vorzugsweise wird die noch harzfreie Dispersionszubereitung in einem heizbaren Mischbehälter vorgelegt und auf 20 bis 95 °C erwärmt. Dann wird unter Rühren die flüssige Harzzubereitung mit einer Temperatur von 20 bis 95 °C zugegeben und so lange eindispergiert, bis eine homogene Klebstoffzubereitung entstanden ist.

Vorzugsweise bestehen die erfindungsgemäßen Dispersionsklebstoffe aus:
a) 5 bis 60 Gew.-% der erfindungsgemäß verwendeten Hauzubereitung und
b) 40 bis 95 Gew.-% wäßrigen Polymerdispersionen bzw. -emulsionen an sich bekannter Art, gegebenenfalls enthaltend zusätzliche Dispergiermittel, Entschäumungsmittel, Konservierungsmittel, Verdickungsmittel, Stellmittel, Additive und Füllstoffe ebenfalls an sich bekannter Art.

Besonders bevorzugt sind wäßrige Klebstoff-Dispersionen auf der Basis von Polyacrylaten, enthaltend die erfindungsgemäß verwendete Zubereitung aus Kolophonium und Fettstoffe. Sie eignen sich besonders zum Verkleben von Boden-, Wand- und Deckenbelägen im Innenraum.

Die erfindungsgemäßen Klebstoffe zeichnen sich durch eine hohe Naßklebkraft, gute Verstreichbarkeit, sehr geringe Emission und vor allem durch Geruchsarmut aus.

### Beispiele

### I. Bestimmung der Erweichungspunkte der Wachse bzw. Wachsmischungen

| Komponenten | Gew. % | Erweichungspunkt (°C) |
|---|---|---|
| Palmitin-/Stearinsäuremethylester (ca. 50:50) techn. | 100 | 27,1 |
| Palmitin-/Stearinsäuremethylester (ca. 50:50) techn. | 90 | 25,5 |
| Epoxidierter Fettsäuremethylester | 10 | |
| Palmitin-/Stearinsäuremethylester (ca. 50:50) techn. | 70 | 22,3 |
| Epoxidierter Fettsäuremethylester | 30 | |
| Palmitin-/Stearinsäuremethylester (ca. 50:50) techn. | 70 | 21,5 |
| Dibutylphthalat | 30 | |
| Palmitin-/Stearinsäuremethylester (ca. 50:50) techn. | 70 | 21,4 |
| Rapsmethylester | 30 | |
| Stearylalkohol | 100 | 57,0 |
| Stearylalkohol | 70 | 52,5 |
| Epoxidierter Fettsäuremethylester | 30 | |
| Stearylalkohol | 50 | 50,3 |
| Epoxidierter Fettsäuremethylester | 50 | |
| Gehärteter Rindertalg | 100 | 50,0 |
| Gehärteter Rindertalg | 33 | 43,5 |
| Dioctyladipat | 77 | |
| Bienenwachs | 100 | 62,6 |
| Polyethylenglykol | 100 | 51,6 |
| Camaubawachs | 100 | 80,5 |
| Myristinsäure | 50 | 48,9 |
| Epoxidiertes Sojaöl | 50 | |
| Myristinsäure | 100 | 53,3 |
| Bienenwachs | 75 | 58,9 |
| Sonnenblumenölfettsäuremethylester | 25 | |
| Paraffinwachs | 100 | 59,3 |
| Paraffinwachs | 50 | 52,8 |
| Dioctyladipat | 50 | |
| Paraffinwachs | 30 | 47,8 |
| Rapsmethylester | 70 | |
| Polyethylenwachs | 50 | 48,3 |
| Epoxidierter Fettsäuremethylester | 50 | |
| Carnaubawachs | 70 | 76,7 |
| Dioctyladipat | 30 | |
| Carnaubawachs | 70 | 77,8 |
| Epoxidierter Fettsäuremethylester | 30 | |

### II. Herstellung und Eigenschaften der Harzlösungen

Die Harzlösung wurde in einem beheizbaren Rührkessel hergestellt. Dazu wurden Harz und Fettsäureester im angegebenen Gewichts-Verhältnis vorgelegt und bei einer Temperatur von 80 °C solange gerührt, bis eine transparente Lösung erhalten wurde (ca. 1,5 Std.).

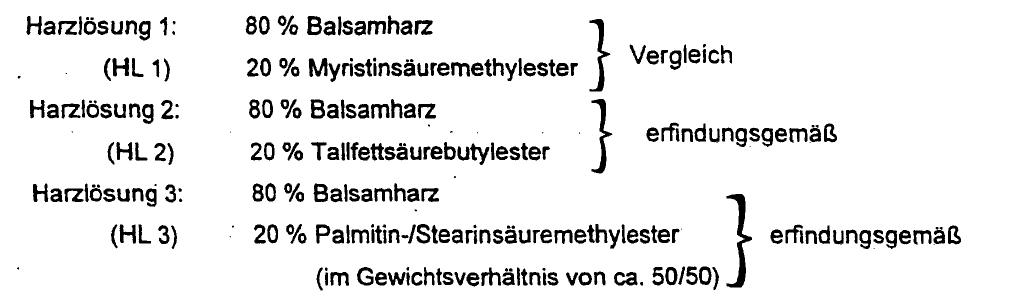

**Tabelle II:**

| Eigenschaften der Harzlösung | | | |
|---|---|---|---|
| | HL 1 (Vergleich) | HL 2 (Erfindung) | HL3 (Erfindung) |
| Viskosität (mPas) | 2 900 | 3 100 | 1 200 |
| Geruch | 3,5 | 4,5 | 3,5 |

Anmerkungen: Die Eigenschften wurden folgendermaßen festgestellt:
- 1. Viskositätsmessung:: Brookfield HBT, Spindel 4, 20 Upm, 70 °C
- 2. Geruchsprüfung:: Es werden ca. 50 g Harzlösung in eine 250 ml-Schraubdeckelglas gefüllt und 3 Tage geschlossen bei 23 °C gelagert. Sodann beurteilen mindestens 5 Probanden den Geruch der Probe nach folgender Skala:
1 - geruchlos
2 - wahrnehmbar
3 - erträglich
4 - belästigend
5 - unerträglich

### III. Verwendung der Harzlösungen zur Herstellung von Klebstoffen

Die ca. 80 °C warmen Harzlösungen wurden bei 20 °C in eine wäßrige Dispersion folgender Zusammensetzung (in Gew.-%) im Laufe von 30 min unter kräftigem Rühren zugemischt.

| | Klebstoffe 1-3* | Klebstoff 4* |
|---|---|---|
| Acrylat-Copolymer-Dispersion | 25 | 25 |
| Dispergierhilfsmittel/Emulgatoren | 2 | 2 |
| Konservierungsmittel | 0,1 | 0,1 |
| Entschäumungsmittel | 0,1 | 0,5 |
| Füllstoff (CaCO₃) | 50 | 49 |
| Harzlösung | 17 | 17 |
| Wasser | 5,3 | 5,3 |
| Epoxidierter Fettsäuremethylester | 0 | 1 |

| | | |
|---|---|---|
| * Klebstoffe 2 bis 4 sind erfindungsgemäße Klebstoffe, während Klebstoff 1 zum Vergleich dient. | | |

Bei der Acrylat-Copolymer-Dispersion handelt es sich um eine handelsübliche 60 %ige wäßrige Dispersion eines Copolymeren aus im wesentlichen Acrylsäurebutylester und weniger als 15 % Acrylnitril der Fa. BASF.
Die Klebstoffe wurden untersucht. Die Meßergebnisse sind in Tabelle III zusammengefaßt.

**Tabelle III:**

| Klebstoff-Eigenschaften | | | | |
|---|---|---|---|---|
| | Klebstoff 1 mit HL 1 (Vergleich) | Klebstoff 2 mit HL 2 (Erfindung) | Klebstoff 4 mit HL 3 (Erfindung) | Klebtoff 3 mit HL 3 (Erfindung) |
| Viskosität [Pas] | 21,9 | 20,7 | 21,5 | 20,9 |
| Naßklebkraft [N/cm] | | | | |
| nach 10 min ablüften | 5,0 | 6,25 | 7,5 | 6,5 |
| 15 min ablüften | 5,5 | 6,25 | 7,5 | 6,5 |
| 20 min ablüften | 3,5 | 6.25 | 8,8 | 7,0 |
| offene Zeit [min] | 15 | 25 | 25 | 25 |
| Geruch: | | | | |
| Klebstoff, naß | 3,2 | 4,0 | 3,2 | 3,2 |
| Klebstoff, trocken | 2,8 | 4,0 | 2,5 | 2,4 |
| Raumluftbelastung [µg/m³] | > 600 | < 300 | < 300 | < 300 |

- Anmerkungen:: Die Prüfungen wurden folgendermaßen durchgeführt:
- 1. Viskosität:: Brookfield HBT, Spindel 4, 20 Upm, 23 °C
- 2. Naßklebkraft:: Der Klebstoff wird mit einem gezahnten Spachtel auf eine mit zementärer Ausgleichsmasse beschichteten Spanplatte aufgetragen (ca. 350 g/m²). Nach unterschiedlicher Ablüftezeit werden 5 cm breite Streifen eines Teppichbodens mit textiler Rückenausstattung in das Klebstoffbett eingelegt und angerieben. Nach 5 Minuten werden die Streifen mit einer Geschwindigkeit von 1 cm/sec senkrecht abgezogen und die Abzugskraft mit einer Federwaage bestimmt.
- 3. Offene Zeit:: Die offene Zeit ist die Zeitspanne, die ein Klebstoff maximal ablüften darf. Das Ende der offenen Zeit des Klebstoffs ist erreicht, wenn die Rückseite eines Textilbelagsstreifens mit Schaumrücken weniger als 30 % benetzt wird.
- 4. Geruch naß:: Siehe Geruchsprüfung Harzlösung.
- 5. Geruch trocken:: Auf eine Glasplatte (5 x 10 cm) wird mit einem Rakel ein ca. 200 µm dicker Klebstoffilm aufgetragen und 24 h bei 23 °C/50 % relativer Feuchte getrocknet. Dann wird die Glasplatte in ein 500 ml-Schraubdeckelglas überführt und 3 Tage bei 23 °C gelagert. Die Beurteilung erfolgt wie bei Prüfung der Harzlösungen.
- 6. Raumluftbelastung:: Die zu erwartende Raumluftbelastung wird in einer Modellprüfkammer bestimmt. Dazu werdenn 300 g/m² Klebstoff auf eine Glasplatte mit gezahntem Spachtel aufgetragen und in eine Prüfkammer eingelagert.
Nach 10 Tagen Lagerung unter folgenden Bedingungen: 23 °C, 50 % rel. Feuchte, 0,5 Luftwechsel pro Stunde und 0,4 m² Probe je m³ Luftraum, wird eine Probe der Luft auf flüchtige organische Verbindungen untersucht und als TVOC-Gehalt (= Summe flüchtiger organischer Verbindungen) in µg/m³ angegeben.
- 7. Jodzahl:: Die Jodzahl nach Kaufmann wird gemäß DGF Methode C-V 11b bestimmt. Die Jodzahl nach Wijs wird gemäß DGF Methode C-V 11 d (ISO 3961) bestimmt.
- 8. Transparenz:: Die Mischung wird in eine Petri-Schale gegossen und bei Raumtemperatur in einer Schichtdicke von 5 mm visuell begutachtet Sie muß klar aussehen und frei von Schlieren und Fettaugen sein.
- 9. Erweichungspunkte:: Methode (ring and ball modifiziert): In einem 25 ml Becherglas (Durchmesser 30 mm, Höhe 48 mm) werden 20 ml des Wachses bzw. der Wachsmischung eingefüllt und im Eisbad auf ca. 10°C abgekühlt. Auf die feste Mischung wird eine kalte Stahlkugel (Gewicht 32,2 g, Durchmesser 19 mm) gelegt und die Mischung langsam erwärmt. Als Erweichungspunkt ist die Temperatur definiert, bei der die Stahlkugel zu Boden fällt.

### IV. Ergebnisse

Die Ergebnisse zeigen, daß die erfindungsgemäße Harzlösung (HL 3) und ein damit hergestellter Dispersions-Klebstoff für Fußbodenbeläge anwendungstechnisch mit den bekannten Klebstoffen zumindest vergleichbar und zusätzlich sehr geruchsarm ist. Setzt man zusätzlich noch einen flüssigen Weichweicher wie z.B einen epoxidierten Fettsäuremethylester zu, so verbessert sich die Naßklebkraft deutlich, ohne das der Geruch oder der Gehalt an VOC negativ beeinflußt wird.

Eine vergleichbare Steigerung der Naßklebkraft ist auch durch Zusatz nicht epoxidierter Fettsäureester, z.B. Palmitinsäuremethylester zu erreichen. Jedoch nimmt die Kohäsion des Klebstoffes dadurch stark ab, was an Scherversuchen leicht zu sehen ist. Für den Klebstoffanwender bedeutet dies, daß mit einem so weichen Klebstoff störrische Bodenbeläge nicht zu kleben sind. Der Einsatz epoxidierter Fettsäureester, insbesondere Epoxystearinsäuremethylester, beeinträchtigt die Kohäsion des Klebstoffs überraschenderweise nicht. Epoxidierte Fettsäureester sind mit Balsamharz und nicht epoxidierten Fettsäureestern verträglich und können daher auch direkt der Harzmischung in Mengen von bis zu 15 %, bevorzugt bis zu 6 % anstelle nicht epoxidierter Fettsäureester zugegeben werden. Dies vereinfacht die Produktion des Klebstoffs.

## Patentansprüche

1. Verwendung einer Mischung aus mindestens einem Kolophonium-Harz und/oder seinen Derivaten mit mindestens einem Wachs, wobei die Wachse einzeln oder im Gemisch miteinander bei 20 °C fest sind, bei der Herstellung von wässrigen Klebstoffdispersionen.

2. Verwendung nach Anspruch 1, **dadurch gekennzeichnet, daß** die Wachse weniger an C-C-Doppelbindungen enthalten, als den Jodzahlen 100, insbesondere 75 und vor allem 50 entspricht.

3. Verwendung nach Anspruch 1, **dadurch gekennzeichnet, daß** die Wachse Fettstoffe sind, die auf geradkettigen unveränderten, modifizierten und/oder derivatisierten Fettsäuren mit mehr als 6 C-Atomen, insbesondere mit 8 bis 22 C-Atomen basieren.

4. Verwendung nach Anspruch 3, **dadurch gekennzeichnet, daß** die Fettsäuren durch Hydrierung von Fettsäuren erhältlich sind.

5. Verwendung nach Anspruch 3, **dadurch gekennzeichnet, daß** die Fettsäuren durch Veresterung, Amidierung oder Reduktion der Säure-Gruppe derivatisiert wurde, insbesondere durch Veresterung mit ein- bis dreiwertigen Alkoholen mit 1 bis 22 C-Atomen, bzw. durch Amidierung mit Ammoniak, primären oder sekundären Aminen mit 1 bis 22 C-Atomen.

6. Verwendung nach mindestens einem der vorangegangenen Ansprüche, **dadurch gekennzeichnet, daß** zusätzlich nicht feste Weichmacher 0 bis zu 100%, vorzugsweise bis zu 50%, bezogen auf das feste Wachs, eingesetzt werden.

7. Verwendung nach Anspruch 1, **dadurch gekennzeichnet, daß** die Mischung eine Viskosität von unter 3 Pas, insbesondere unter 2,5 Pas bei 70 °C nach Brookfield hat, wenn sie aus 80 Gew.-% Kolophonium-Harz und 20 Gew.-% Wachsen zusammengesetzt ist.

8. Verwendung nach mindestens einem der vorangegangenen Ansprüche 1 bis 7, **gekennzeichnet durch** ihre Zusammensetzung aus
A) 5 bis 50 Gew.-% an mindestens einem Wachs,
B) 95 bis 50 Gew.-% an mindestens einem Harz, bezogen auf die Mischung aus Wachsen und Harzen.

9. Verwendung nach Anspruch 1, **gekennzeichnet durch** die Herstellung der Mischung nach mindestens einem der Ansprüche 1 bis 8 **dadurch**, daß man das Kolophonium-Harz und mindestens ein festes Wachs, insbesondere mindestens einen festen Fettstoff bei mindestens 40 °C solange rührt, bis eine transparente Lösung entsteht.

10. Verwendung nach Anspruch 1 bei der Herstellung von wäßrigen Klebstoffdispersionen auf der Basis von Homo- oder Copolymeren des Vinylacetats, insbesondere mit Ethylen, oder von Homo- oder Copolymeren von Acrylaten mit 1 bis 22 C-Atomen in der Alkohol-Komponente, insbesondere mit Styrol oder Acrylnitril.

11. Wäßrige Klebstoff-Dispersion auf der Basis von Polyacrylaten, enthaltend Kolophonium und Fettstoffe nach mindestens einem der vorangegangenen Ansprüche.

12. Wäßrige Klebstoff-Dispersion nach Anspruch 11 zum Verkleben von Boden-, Wand- und Deckenbelägen im Innenraum.

## Claims

1. Use of a mixture of at least one rosin and/or rosin derivative and at least one wax in the production of aqueous adhesive dispersions, wherein the waxes individually or in admixture with one another are solid at 20 °C.

2. A use as claimed in claim 1, **characterized in that** the waxes contain fewer C-C double bonds than corresponds to an iodine value of 100, more particularly 75 and above all 50.

3. A use as claimed in claim 1, **characterized in that** the waxes are solids based on linear unmodified, modified and/or derivatized fatty acids containing more than 6 carbon atoms and more particularly 8 to 22 carbon atoms.

4. A use as claimed in claim 3, **characterized in that** the fatty acids are obtainable by hydrogenation of fatty acids.

5. A use as claimed in claim 3, **characterized in that** the fatty acids were derivatized by esterification, amidation or reduction of the acid group, more particularly by esterification with mono- to trihydric alcohols containing 1 to 22 carbon atoms, or by amidation with ammonia, primary or secondary amines containing 1 to 22 carbon atoms.

6. A use as claimed in at least one of the preceding claims, **characterized in that** non-solid plasticizers are additionally used in quantities of 0 to 100 % and preferably up to 50 %, based on the solid wax.

7. A use as claimed in claim 1, **characterized in that** the mixture has a Brookfield viscosity below 3 Pas and more particularly below 2.5 Pas at 70 °C where it consists of 80 % by weight of rosin and 20 % by weight of waxes.

8. A use as claimed in at least one of the preceding claims 1 to 7, **characterized by** the composition of the mixture of
(A) 5 to 50 % by weight of at least one wax,
(B) 95 to 50 % by weight of at least one resin, based on the mixture of waxes and resins.

9. A use as claimed in claim 1, **characterized by** the preparation of the mixture as defined in at least one of claims 1 to 8 by stirring the rosin and at least one solid wax, more particularly at least one solid fatty compound, at at least 40 °C until a transparent solution is formed.

10. A use as claimed in claim 1 in the production of aqueous adhesive dispersions based on homo- or copolymers of vinyl acetate, more particularly with ethylene, or of homo- or copolymers of acrylates containing 1 to 22 carbon atoms in the alcohol component, more particularly with styrene or acrylonitrile.

11. An aqueous polyacrylate-based adhesive dispersion containing rosin and fatty compounds according to at least one of the preceding claims.

12. The aqueous adhesive dispersion claimed in claim 11 for bonding interior floor, wall and ceiling coverings in place.

## Revendications

1. Utilisation d'un mélange constitué d'au moins une résine de colophane et/ou de ses dérivés avec au moins une cire dans la préparation de dispersions aqueuses d'adhésifs, les cires étant solides isolément ou mélangées entre elles à 20 °C.

2. Utilisation selon la revendication 1, **caractérisé en ce que** les cires contiennent moins de doubles liaisons C-C que ce qui correspond aux indices d'iode de 100, en particulier 75 et surtout 50.

3. Utilisation selon la revendication 1, **caractérisé en ce que** les cires sont des solides qui se basent sur des acides gras à chaine droite non-modifiés, modifiés et/ou transformés en dérivés, et comportant plus de 6 atomes de carbone, en particulier de 8 à 22 atomes de carbone.

4. Utilisation selon la revendication 3, **caractérisé en ce qu'**on peut obtenir les acides gras par hydrogénation d'acides gras.

5. Utilisation selon la revendication 3, **caractérisé en ce qu'**on transforme les acides gras en dérivés par estérification, amidation ou réduction du groupe acide, en particulier par estérification avec des alcools mono- à trivalents comportant de 1 à 22 atomes de carbone, ou selon les cas par amidation avec de l'ammoniac, des amines primaires ou secondaires comportant de 1 à 22 atomes de carbone.

6. Utilisation selon au moins une des revendications précédentes, **caractérisé en ce qu'**on utilise en outre des plastifiants non-solides à raison de 0 à 100 %, de préférence jusqu'à 50 %, par rapport à la cire solide.

7. Utilisation selon la revendication 1, **caractérisé en ce que** le mélange présente une viscosité inférieure à 3 Pas, en particulier inférieure à 2,5 Pas à 70 °C selon Brookfield, lorsqu'il est composé à 80 % en poids de résine de colophane et à 20 % en poids de cires.

8. Utilisation selon au moins une des revendications 1 à 7, **caractérisé en ce que** le mélange est composé de:
(A) 5 à 50 % en poids d'au moins une cire,
(B) 95 à 50 % en poids d'au moins une résine, par rapport au mélange de cires et de résines.

9. Utilisation salon la revendication 1, **caractérisée par** la préparation du mélange selon au moins une des revendications 1 à 8 en agitant la résine de colophane et au moins une résine solide, en particulier un solide résistant à au moins 40 °C, jusqu'à ce qu'apparaisse une solution transparente.

10. Utilisation selon la revendication 1 dans la préparation de dispersions aqueuses d'adhésifs à base d'homo- ou copolymères d'acétate de vinyle, en particulier avec l'éthylène, ou d'homo- ou copolymères d'acrylates comportant de 1 à 22 atomes de carbone dans le composant alcool, en particulier avec le styrène ou l'acrylonitrile.

11. Dispersion aqueuse d'adhésif à base de polyacrylates, contenant du colophane et des solides selon au moins une des revendications précédentes.

12. Dispersion aqueuse d'adhésif selon la revendication 11, pour coller des revêtements de sol, de paroi et de plafond en intérieur.
